# EUROPEAN PATENT APPLICATION

(11) **EP 4 482 198 A1**
(43) Date of publication of application: **25.12.2024**
(21) Application number: 23769655.4
(22) Date of filing: 09.03.2023
(51) Int. Cl.: H04W 24/04

(54) **CLOCK STATE SYNCHRONIZATION METHOD AND COMMUNICATION APPARATUS**

(30) Priority: 14.03.2022 CN 202210248244
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Thun, Clemens
(86) International application number: PCT/CN2023/080457
(87) International publication number: WO 2023/174149

(57) **Abstract**

This application discloses a clock status synchronization method and a communication apparatus. In the method, a first access network device determines a clock status of the first access network device, and sends a clock status message to a first network device or a target terminal. The first network device and/or the target terminal sends a time provision request to a second network device based on the clock status message, to request to obtain an access network device for providing a time provision service for the first network device and/or the target terminal. The second network device determines the access network device for providing the time provision service for the first network device and/or the target terminal, and sends time provision indication information to the determined access network device, to indicate the access network device to provide the time provision service for the first network device and/or the target terminal. According to the foregoing method, a problem about how to ensure that the first network device and the target terminal can obtain the time provision service when the access network device encounters a clock failure can be resolved, so that time synchronization with a TSN system is completed based on time synchronization in a mobile communication system.

## Description

### CROSS-REFERENCE TO RELATED APPLICATIONS

This application claims priority to Chinese Patent Application No. 202210248244.6, filed with the China National Intellectual Property Administration on March 14, 2022 and entitled "CLOCK STATUS SYNCHRONIZATION METHOD AND COMMUNICATION APPARATUS", which is incorporated herein by reference in its entirety.

### TECHNICAL FIELD

This application relates to the wireless communication field, and in particular, to a clock status synchronization method and a communication apparatus.

### BACKGROUND

A time provision function of a 5G network is a network function that can be exposed to the outside, to provides time for another device. A time provision exposure capability of the 5G network may be activated and deactivated by an application function (application function, AF) network element. For example, a terminal device in a 5G system requests time provision. The terminal device sends a time provision request of the terminal device to an access network device, the access network device forwards the time provision request to a timing network function (timing network function, T-NF) network element in a core network, and the T-NF selects appropriate clock information based on the time provision request of the terminal device to provides time for the terminal device.

In addition, in an industrial internet requirement discussion phase, it is specified that a service requirement of a time sensitive network (time sensitive network, TSN) needs to be supported. In fields such as communication and industrial control, most tasks are based on a time reference. Therefore, accurate clock synchronization is a basic requirement. The TSN first needs to resolve problems of clock synchronization and delay calculation in the network to ensure high consistency of task scheduling in the entire network. Many vertical industry users expect that a 5G network can replace wired access of a conventional TSN, and when a terminal device accesses the TSN through a 5G communication system, not only an existing control function of the TSN can be implemented, but also various performance indicators of data transmission in the TSN can be satisfied.

A basic idea of a TSN clock synchronization solution is as follows: A terminal device, an access network device (such as a gNB), a user plane function (user plane function, UPF), and the like in a 5G communication system first synchronize with a clock in the 5G communication system. TSN clock information is carried in a general precise time protocol (general precise time protocol, gPTP) packet, which is transmitted to a device-side TSN protocol translation function (device-side TSN translator, DS-TT) through a network-side TSN protocol translation function (network TSN translator, NW-TT). The NW-TT is usually a functional module in the UPF, and the DS-TT is usually a functional module in the terminal. The DS-TT in the terminal calculates a deviation between the 5G clock and a TSN clock based on timestamp information in the gPTP packet, and finally obtains accurate TSN clock information.

The 5G communication system is a part of a TSN transmission network, and 5G clock synchronization is very important for TSN clock synchronization. If an access network device that provides a 5G clock time provision service encounters a clock failure and cannot provide the 5G clock time provision service, synchronization with the TSN clock cannot be implemented because the terminal device cannot synchronize with the clock in the 5G communication system. However, there is no solution to resolve the clock failure currently.

### SUMMARY

This application provides a clock status synchronization method and a communication apparatus, to synchronize clock status information of an access network device to a terminal device, so that when the access network device encounters a clock failure, a terminal and a network device that obtain time provision access through the access network device can seek another access network device to provide a time provision service.

According to a first aspect, this application provides a clock status synchronization method, including: A first access network device determines a current clock status of the first access network device; and the first access network device sends a clock status message to a first network device, a target terminal, or a second network device, where the clock status message indicates the current clock status. The first network device includes a device provided with a network-side TSN protocol translation function NW-TT functional module, and the second network device includes a timing network function T-NF network element.

In a possible implementation, the clock status message includes any one of the following messages: a first clock failure message, indicating that the first access network device encounters a clock failure currently; a second clock failure message, indicating that the first access network device encounters a clock failure currently but is capable of continuing to provide a time provision service within a provided start/stop time; and a failure recovery message, indicating that a clock of the first access network device has been recovered to normal.

In a possible implementation, the failure recovery message includes recovered clock information of the first access network device.

In a possible implementation, when the clock status message includes the failure recovery message, the method further includes: The first access network device receives time provision indication information sent by the second network device, where the time provision indication information indicates the first access network device to provide a time provision service for the first network device and/or the target terminal; and the first access network device sends time provision reference information to the first network device and/or the target terminal, where the time provision reference information is used to provide a time provision service for the first network device and/or the target terminal.

In a possible implementation, the clock status message sent by the first access network device to the second network device includes information about a time provision object, and the time provision object includes a network device and/or a terminal, so that when the first access network device encounters a clock failure, the second network device determines, for the time provision object, another device for providing a time provision service, or when a clock failure of the first access network device is recovered, the second network device determines whether the first access network device is to provide a time provision service for the authorization object.

According to a second aspect, this application provides a clock status synchronization method. The method includes: A first network device receives a clock status message, where the clock status message indicates a current clock status of a source device that sends the clock status message; and the first network device sends a time provision request to a second network device based on the clock status message, where the time provision request is used to request to provide a time provision service for the first network device and/or a target terminal.

In a possible implementation, the clock status message includes a first clock failure message, indicating that the source device that sends the clock status message encounters a clock failure currently; and the time provision request is specifically used to request to provide a time provision service for the first network device and/or the target terminal; or the clock status message includes a second clock failure message, indicating that the source device that sends the clock status message encounters a clock failure currently but is capable of continuing to provide a time provision service within a provided start/stop time; and the time provision request is specifically used to request to determine, within the provided start/stop time, another device for providing a time provision service for the first network device and/or the target terminal; or the clock status message includes a failure recovery message, indicating that a clock of the source device that sends the clock status message has been recovered to normal; and the time provision request is specifically used to request the source device that sends the clock status message to provide a time provision service for the first network device and/or the target terminal.

In a possible implementation, when the clock status message includes the first clock failure message or the second clock failure message, the method further includes: The first network device receives time provision reference information sent by another device, where the time provision reference information is used to provide a time provision service for the first network device.

In a possible implementation, the failure recovery message includes clock information obtained after the failure recovery; and that the first network device sends a time provision request to a second network device based on the clock status message includes: The first network device sends the time provision request to the second network device if the first network device determines, based on the recovered clock information and clock information for currently providing a time provision service for the first network device and/or the target terminal, that the source device that sends the clock status message is to provide a time provision service for the target terminal and/or the first network device.

In a possible implementation, the method further includes: The first network device receives time provision reference information sent by the source device that sends the clock status message, where the time provision reference information is used to provide a time provision service for the first network device.

In a possible implementation, the time provision request includes a time provision accuracy requirement and/or a time provision clock source requirement.

According to a third aspect, this application provides a clock status synchronization method. The method includes: A terminal receives a clock status message, where the clock status message indicates a current clock status of a first access network device; and the terminal sends a time provision request to a second network device based on the clock status message, where the time provision request is used to request to provide a time provision service for the terminal and/or a first network device.

In a possible implementation, the clock status message includes a first clock failure message, indicating that the first access network device encounters a clock failure currently; and the time provision request is specifically used to request to provide a time provision service for the terminal and/or the first network device; or the clock status message includes a second clock failure message, indicating that the first access network device encounters a clock failure currently but is capable of continuing to provide a time provision service within a provided start/stop time; and the time provision request is specifically used to request to determine, within the provided start/stop time, another device for providing a time provision service for the terminal and/or the first network device; or the clock status message includes a failure recovery message, indicating that a clock of the first access network device has been recovered to normal; and the time provision request is specifically used to request the first access network device to provide a time provision service for the terminal and/or the first network device.

In a possible implementation, when the clock status message includes the first clock failure message or the second clock failure message, the method further includes: The first network device receives time provision reference information sent by a second access network device, where the time provision reference information is used to provide a time provision service for the terminal.

In a possible implementation, the failure recovery message includes clock information obtained after the failure recovery; and that the terminal sends a time provision request to a second network device based on the clock status message includes: The terminal determines, based on the recovered clock information and clock information for currently providing a time provision service for the terminal, that the first access network device is to provide a time provision service for the terminal, and sends the time provision request to the second network device.

In a possible implementation, the method further includes: The terminal receives time provision reference information sent by the first access network device, where the time provision reference information is used to provide a time provision service for the terminal.

In a possible implementation, the time provision request includes a time provision accuracy requirement and/or a time provision clock source requirement.

According to a fourth aspect, this application provides a clock status synchronization method. The method includes: A second network device receives a time provision request, where the time provision request is used to request to provide a time provision service for a first network device and/or a target terminal; the second network device determines a device for providing a time provision service for the first network device and/or the target terminal; and the second network device modifies time provision configuration context information of the first network device and/or the target terminal, where the time provision configuration context information includes information about the device for providing a time provision service for the first network device and/or the target terminal.

In a possible implementation, the method further includes: The second network device sends time provision indication information to the determined device, where the time provision indication information indicates the determined device to provide a time provision service for the first network device and/or the target terminal.

In a possible implementation, the time provision request includes a time provision accuracy requirement and/or a time provision clock source requirement; and the second network device determines, based on the time provision accuracy requirement and/or the time provision clock source requirement, the access network device for providing a time provision service for the first network device and/or the target terminal.

In a possible implementation, the time provision request includes a provided start/stop time, and the provided start/stop time indicates to determine, within the provided start/stop time, that another device is the device for providing a time provision service for the first network device and/or the target terminal.

In a possible implementation, before the second network device determines the device for providing a time provision service for the first network device and/or the target terminal, the method further includes: The second network device receives a clock status message, where the clock status message indicates a current clock status of a source device that sends the clock status message. That the second network device determines a device for providing a time provision service for the first network device and/or the target terminal includes: The second network device determines, based on the current clock status of the source device that sends the clock status message, the device for providing a time provision service for the first network device and/or the target terminal.

In a possible implementation, the clock status message includes information about a time provision object, and the time provision object includes a network device and/or a terminal, so that when a first access network device encounters a clock failure, the second network device determines, for the time provision object, another device for providing a time provision service, or when a clock failure of a first access network device is recovered, the second network device determines whether the first access network device is to provide an authorization service for the authorization object. Alternatively, the method further includes: The second network device determines a time provision object based on an identifier of the source device that sends the clock status message; and the second network device determines, for the time provision object, a device for providing a time provision service.

In a possible implementation, the method further includes: The second network device sends a time provision notification to a third network device if the second network device does not find a device that is capable of meeting a time provision service requirement of the first network device and/or the target terminal; and the second network device receives a time provision notification response sent by the third network device, where the time provision notification response indicates to abandon a clock synchronization requirement for the first network device and/or the target terminal; or if the time provision notification response includes information about another device that is for providing a time provision service and that is determined for the first network device and/or the target terminal, the second network device modifies the time provision configuration context information of the first network device and/or the target terminal based on the information about the another device; or the time provision notification response includes an updated time provision accuracy requirement and/or time provision clock source requirement of the first network device and/or the target terminal, and the authorization notification response indicates the second network device to determine, for the first network device and/or the target terminal based on the updated time provision accuracy requirement and/or time provision clock source requirement, another device for providing a time provision service.

In a possible implementation, the time provision notification includes information about one or more candidate access network devices; and/or the time provision notification includes one or any combination of the following information: an identifier of the target terminal, an identifier of the first network device, and an identifier of a device-side time sensitive network protocol translation function interface.

In a possible implementation, the method further includes: The second network device receives a time provision request sent by the third network device, where the time provision request includes information about a time provision object and one or any combination of the following time provision requirement information: a time provision accuracy requirement, a time provision clock source requirement, and coverage area information, the time provision object includes a network device and/or a terminal, and the time provision request is used to request to select a device that meets the time provision requirement to provide a time provision service for the time provision object; and the second network device selects, for the time provision object based on the time provision request sent by the third network device, a device for providing a time provision service.

According to a fifth aspect, this application provides a clock status synchronization method. The method includes: A third network device receives a time provision notification from a second network device, where the time provision notification indicates that the second network device does not determine, for a first network device and/or a target terminal, a device for providing a time provision service; or indicates clock status information of a device that is for providing a time provision service and that is currently determined for a first network device and/or a target terminal; and the third network device sends a time provision notification response to the second network device, where the time provision notification response indicates to abandon a clock synchronization requirement for the first network device and/or the target terminal; or the time provision notification response includes information about an access network device that is for providing a time provision service and that is determined for the first network device and/or the target terminal; or the time provision notification response includes updated time provision requirement information of the first network device and/or the target terminal, the time provision requirement information includes a time provision accuracy requirement and/or a time provision clock source requirement, and the authorization notification response indicates the second network device to determine, for the first network device and/or the target terminal based on the updated time provision requirement information, another device for providing a time provision service.

In a possible implementation, the time provision notification includes information about one or more candidate access network devices; and/or the time provision notification includes one or any combination of the following information: an identifier of the target terminal, an identifier of the first network device, and an identifier of a device-side time sensitive network protocol translation function interface.

In a possible implementation, the method further includes: The third network device sends a time provision request to the second network device, where the time provision request includes information about a time provision object, and the time provision request further includes one or any combination of the following time provision requirement information: a time provision accuracy requirement, a time provision clock source requirement, and coverage area information. The time provision request is used to request to select a device that meets the time provision requirement information to provide a time provision service for the time provision object.

According to a sixth aspect, this application provides a communication apparatus. The apparatus includes modules/units for performing the method according to any one of the first aspect to the fifth aspect and the possible implementations. These modules/units may be implemented by hardware, or may be implemented by hardware executing corresponding software.

According to a seventh aspect, an embodiment of this application provides a communication apparatus, including a processor, and a memory and a communication interface that are separately coupled to the processor. The communication interface is configured to communicate with another device. The processor is configured to run instructions or a program in the memory, to perform, by using the communication interface, the clock status synchronization method according to any one of the first aspect to the fifth aspect and the possible implementations.

According to an eighth aspect, an embodiment of this application provides a computer-readable storage medium. The computer-readable storage medium stores computer-executable instructions. When the computer-executable instructions are run on a computer, the method according to any one of the first aspect to the fifth aspect and the possible implementations is performed.

According to a ninth aspect, an embodiment of this application provides a computer program product including instructions. When the computer program product runs on a computer, the method according to any one of the first aspect to the fifth aspect and the possible implementations is performed.

### BRIEF DESCRIPTION OF DRAWINGS

FIG. 1 is a logical architectural diagram of accessing a TSN system through a 5G communication system according to an embodiment of this application;
FIG. 2 is a diagram of an architecture of a wireless communication system to which an embodiment of this application is applicable;
FIG. 3 is a schematic flowchart of a clock status synchronization method according to an embodiment of this application;
FIG. 4 is a schematic flowchart of a clock status synchronization method according to an embodiment of this application;
FIG. 5A and FIG. 5B are a schematic flowchart of a clock status synchronization method according to an embodiment of this application;
FIG. 6 is a schematic flowchart of a clock status synchronization method according to an embodiment of this application;
FIG. 7 is a schematic flowchart of a clock status synchronization method according to an embodiment of this application;
FIG. 8 is a schematic flowchart of a clock status synchronization method according to an embodiment of this application;
FIG. 9 is a diagram of a communication apparatus according to an embodiment of this application; and
FIG. 10 is a diagram of another communication apparatus according to an embodiment of this application.

### DESCRIPTION OF EMBODIMENTS

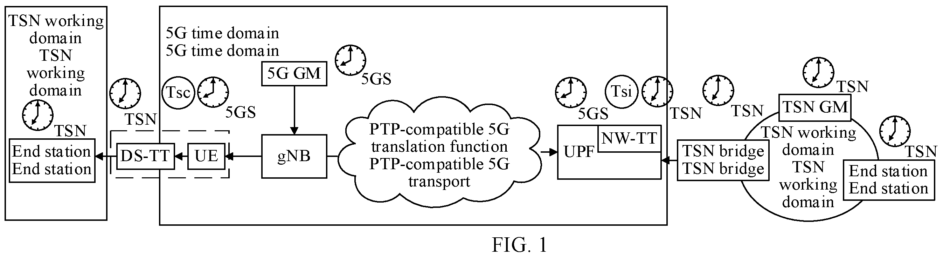

A logical architectural diagram of accessing a TSN system through a 5G communication system may be shown in FIG. 1.

A TSN working clock domain (TSN working domain) may be a clock source defined by a factory, and does not need to be consistent with time such as GPS or universal time coordinated (universal time coordinated, UTC). In the TSN working clock domain, a TSN GM represents a clock source of a TSN system. A TSN bridge (bridge) is mainly configured to send a time synchronization packet to a 5G time domain (5G time domain), so that a terminal in a 5G communication system can synchronize time with the TSN system. An end station (end station) is configured to complete latency and frequency deviation measurement based on a time synchronization packet from the terminal.

The 5G time domain (5G time domain) is a precise time protocol (precise time protocol, PTP) node for the TSN system. Therefore, devices in the 5G time domain need to work under a same clock. A 5G GM represents a clock source of the 5G communication system, and a global positioning system (global positioning system, GPS) is usually used as a clock source.

A network-side TSN protocol translation function (network-side TSN translator, NW-TT) is configured to connect to a TSN system on a network side, is usually a functional module in a UPF, and is configured to introduce TSN data into a 5G network. Because the NW-TT receives a time synchronization packet from the TSN system, the NW-TT may be understood as a slave (slave) interface. The NW-TT needs to complete functions such as performing latency and frequency deviation measurement with the TSN bridge and adding an ingress timestamp Tsi to a time synchronization packet.

A device-side TSN protocol translation function (device-side TSN translator, DS-TT) is configured to connect to a TSN system on a terminal side, may be a functional module in the terminal, or may be connected to the terminal in a wired or wireless manner, and is configured to input TSN data to a TSN. Because the DS-TT needs to send a time synchronization packet to the TSN, the DS-TT may be understood as a master (Master) interface. The DS-TT needs to cooperate with the end station (end station) to complete latency and frequency deviation measurement, add an egress timestamp Tsc to a time synchronization packet received from the terminal, and then calculate an internal forwarding latency.

Specifically, when time synchronization in the TSN system is performed, the NW-TT in the UPF receives a time synchronization packet of the TSN system from the TSN bridge, adds an ingress timestamp to the time synchronization packet based on 5G time, and then sends the time synchronization packet to the terminal through an access network device in the 5G communication system. The DS-TT in the terminal adds an egress timestamp to the time synchronization packet based on the 5G time, and determines a forwarding latency from the UPF to the terminal based on the ingress timestamp and the egress timestamp. In this way, time synchronization between the terminal and the TSN is implemented based on the forwarding latency and the time synchronization packet. The DS-TT sends the time synchronization packet to the end station, so that the end station completes latency and frequency deviation measurement.

It can be learned that time synchronization between the terminal and the TSN system depends on time synchronization in the 5G communication system for implementation. In the 5G communication system, an access network device usually provides a time provision service for a terminal and a core network device (such as a UPF), so that the terminal and the core network device implement time synchronization with the 5G communication system.

If the access network device encounters a clock failure due to a failure of global navigation satellite system (global navigation satellite system, GNSS) information or another reason, and cannot provide an accurate time provision service for the terminal and the core network device, but the terminal device and the core network device do not know a clock status of the access network device, time synchronization with the 5G communication system cannot be implemented, and time synchronization between the terminal and the TSN system cannot be implemented. Currently, there is no effective solution to the clock failure of the access network device.

In view of this, embodiments of this application provide a clock status synchronization method, so that a terminal or a core network device can obtain a clock status of an access network device in a timely manner, thereby facilitating subsequent search for an access network device that can provide an accurate clock service.

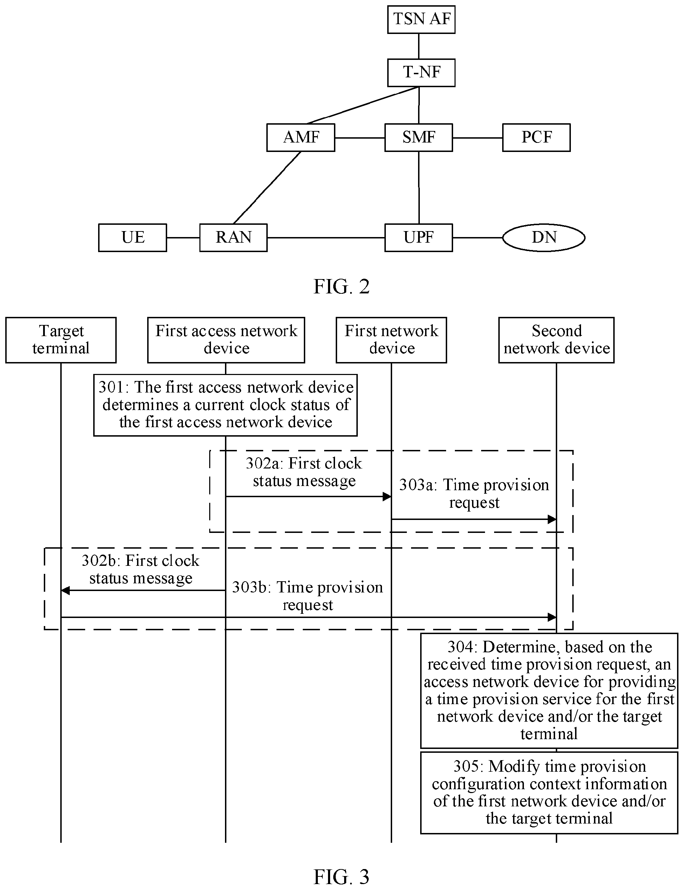

The clock status synchronization method provided in embodiments of this application may be applied to a wireless communication system, for example, a 5G communication system or a future communication system. FIG. 2 is an example of a diagram of an architecture of a wireless communication system to which an embodiment of this application is applicable. The system architecture may include the following units or devices.

A terminal device is a device with wireless sending and receiving functions. The terminal device is connected to a radio access network in a wireless manner, to access the communication system. The terminal device may also be referred to as a terminal, user equipment, a mobile station, a mobile terminal, or the like. The terminal device may be a mobile phone, a tablet computer, a computer having wireless sending and receiving functions, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. Neither of a specific technology and a specific device form used for the terminal device is limited in embodiments of this application. In the following embodiments, the terminal device is briefly referred to as a terminal for example description.

The radio access network (radio access network, RAN) is configured to implement a function related to radio access. The radio access network may also be referred to as an access network device or a base station, and is configured to connect the terminal to a radio network. The radio access network may be a base station (base station), an evolved NodeB (evolved NodeB, eNodeB) in an LTE system or an LTE-advanced (LTE-Advanced, LTE-A) system, a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The radio access network may alternatively be a module or a unit that completes some functions of a base station. For example, the radio access network may be a central unit (central unit, CU) or a distributed unit (distributed unit, DU). Neither of a specific technology and a specific device form used for the radio access network is limited in embodiments of this application. In the following embodiments, the radio access network is referred to as an access network device for example description.

A UPF is mainly responsible for processing a user packet, for example, user plane-related functions such as forwarding, charging, lawful interception, uplink packet detection, and downlink data packet storage. The UPF in embodiments of this application may be a core network device integrated with an NW-TT functional module.

A T-NF may be configured to select corresponding clock information based on a time provision requirement of a time provision requester or a third-party application, and may indicate a corresponding clock information network element to provide a time provision service for the UPF and the terminal. The T-NF may be implemented based on a time sensitive communication and time synchronization function network element (TSC TSF) defined by the 3GPP. For example, a TSC TSF defined by the 3GPP R17 standard supports some or all functions of the T-NF proposed in the present invention.

A TSN AF is a third-party application of the TSN, and is configured to receive a clock synchronization status notification from a clock management network element and select different clock reference information as required.

An access and mobility management function (access and mobility management function, AMF) network element is mainly used for attachment and mobility management of a terminal in a mobile network.

A session management function (session management function, SMF) network element is mainly used for session management in a mobile network, for example, session establishment, modification, and release. A specific function is, for example, to allocate an internet protocol (internet protocol, IP) address to the terminal, and select a user plane network element that provides a packet forwarding function.

Main functions of a policy control function (Policy Control Function, PCF) include policy-related functions such as formulating a unified policy, providing policy control, and obtaining subscription information related to policy decision from a UDR.

A main function of a data network (data network, DN) is to provide a specific data service, for example, an operator service, internet access, or a third-party service.

It should be understood that a 5G communication system is used as an example in FIG. 2 to provide an example of a network architecture to which an embodiment of this application is applicable. An actually used network architecture may include more or fewer network elements than those shown in FIG. 2.

FIG. 3 is a schematic flowchart of a clock status synchronization method according to an embodiment of this application. As shown in the figure, the method may include the following steps.

Step 301: A first access network device determines a current clock status of the first access network device.

The access network device detects the clock status of the access network device, to determine the current clock status. Specifically, the access network device may periodically detect the clock status of the access network device, or may detect the clock status of the access network device based on a preset trigger condition when the trigger condition is met.

The clock status of the access network device may include one of the following states:
State 1: Clock failure holding state: indicates that the access network device encounters a failure currently, can continue to provide a time provision service for a terminal or a core network device within a provided start/stop time, but cannot provide an accurate time provision service for the terminal or the core network device after the provided start/stop time expires. For example, if the first access network device cannot receive GNSS information for obtaining accurate time, the first access network device cannot correct time information of the first access network device. This may cause time inaccuracy. However, a time error is gradually accumulated with time. In a period of time after the failure just occurs, although there may be a time error, a time provision service can still be provided for the terminal or the core network device because the error is small and is within an allowed error range. However, as the time error is gradually accumulated to a large value, if the time error exceeds the allowed error range, an accurate time provision service cannot continue to be provided. In this case, the provided start/stop time may be configured, so that the terminal or the core network device determines that a time provision service meeting an error requirement can still be obtained within the provided start/stop time.
State 2: Clock failed state: indicates that the access network device encounters a clock failure currently, and cannot provide a time provision service that meets an error requirement for a terminal or a core network device. The clock failed state indicates that providing of the time provision service that meets the time error requirement cannot be ensured currently. The state may be that the time provision service that meets the time error requirement cannot continue to be provided after a provided start/stop time expires, or may be that due to different failure types, the time provision service cannot be ensured immediately once the first access network device encounters a clock failure.
State 3: Failure recovered state: indicates that the access network device encounters a failure previously but is recovered currently, and can continue to provide a time provision service that meets a time error requirement for a terminal or a core network device.

After determining the current clock status of the access network device, the access network device may perform step 302a to trigger step 303a, or may perform step 302b to trigger step 303b.

Step 302a: The first access network device sends a first clock status message to a first network device.

The access network device generates the first clock status message based on the current clock status of the access network device, and sends the first clock status message to the first network device that is currently provided with a time provision service through the first access network device. The first network device may be a UPF provided with an NW-TT functional module. Alternatively, if an NW-TT functional module is provided in another device, the first network device may be the another device provided with the NW-TT functional module.

The first network device may be provided with a time provision service through the access network device, or may be provided with a time provision service through another device, for example, may be provided with a time provision service through a core network device, or may be provided with a time provision service through a device outside a mobile communication system. In the embodiment shown in step 302a and step 303a, an example in which the access network device provides a time provision service for the first network device is used.

As described above, the clock status may include the clock failed state, the clock failure holding state, or the failure recovered state. Correspondingly, the first clock status message may indicate that the first access network device encounters a clock failure currently, or may indicate that the first access network device encounters a clock failure currently but can continue to provide a time provision service within the provided start/stop time, or may indicate that a clock of the first access network device has been recovered to normal.

Further, when the first clock status message indicates that the first access network device encounters a clock failure currently but can continue to provide a time provision service within the provided start/stop time, the first clock status message may further include indication information of the provided start/stop time. For example, if the indication information indicates that the provided start/stop time is 10 minutes, it indicates that the first access network device can still provide, for a terminal or a core network device within 10 minutes, a time provision service that meets a time error requirement. However, after 10 minutes, clock information provided by the first access network device may not meet the time error requirement.

In a possible implementation, the first access network device may not be capable of directly sending the first clock status message to the first network device, but needs forwarding by another device. In this case, when receiving the first clock status message, the first network device needs to determine a source device that sends the first clock status message. If the source device that sends the message is the first access network device, the first network device determines the clock status of the first access network device based on the first clock status message.

Step 303a: The first network device sends a time provision request to a second network device, where the time provision request is used to request to provide a time provision service for the first network device and/or a target terminal.

The second network device may be a T-NF in a 5G communication system, or may be a network device configured to allocate an access network device for providing a time provision service in another communication system.

The target terminal represents a terminal for which a time synchronization packet from a TSN system is forwarded through the first network device, that is, the terminal shown in FIG. 2 that can form a closed loop with the TSN system through the first network device.

After receiving the first clock status message, the first network device determines, based on the clock status that is of the first access network device and that is indicated by the first clock status message, whether a new access network device for providing a time provision service needs to be sought for the first network device and/or the target terminal.

When the first network device is provided with a time provision service through an access network device, the first network device and the target terminal are usually provided with a time provision service through a same access network device. When both the first network device and the target terminal are provided with a time provision service through the first access network device, the first network device may seek, for the first network device and the target terminal based on the received clock status information, a device for providing a time provision service. If the first clock status message indicates that the first access network device encounters a clock failure currently but can continue to provide a time provision service within the provided start/stop time, the time provision request sent by the first network device may be used to request the second network device to allocate, within the provided start/stop time, a new device for providing a time provision service for the first network device and/or the target terminal. In this case, the time provision request may include indication information of the clock failure of the first access network device, and may further include the indication information of the provided start/stop time.

If the first clock status message indicates that the first access network device encounters a clock failure currently and cannot provide a time provision service, the time provision request sent by the first network device may be used to request the second network device to immediately allocate a new device for providing a time provision service for the first network device and/or the target terminal. In this case, the time provision request may include indication information of the clock failure of the first access network device.

If the first clock status message indicates that a clock failure of the first access network device has been recovered, the time provision request sent by the first network device may be used to request to recover a time provision service provided by the first access network device for the first network device and/or the target terminal. In this case, the time provision request sent by the first network device may include indication information of the clock failure recovery of the first access network device, to notify the second network device that the first network device expects the first access network device to continue to provide a time provision service.

Further, the time provision request sent by the first network device may further include a requirement for time provision accuracy and/or a requirement for a time provision clock source of the first network device and/or the target terminal, so that the second network device determines an appropriate access network device for the first network device and/or the target terminal based on the requirement of the first network device and/or the target terminal. The time provision accuracy may include a time provision scale, for example, second, millisecond, or microsecond, and may include a time provision error. The time provision clock source may include a GPS, a UTC, or the like.

In a possible implementation, when the first access network device performs both step 302a and step 302b, that is, the first access network device notifies both the first network device and the terminal of the clock status of the first access network device, in this case, the first network device may seek, for only the first network device, a new access network device for providing a time provision service.

In another possible implementation, when the first access network device does not perform step 302b, that is, the first access network device notifies the first network device of the clock status of the first access network device, but does not notify the terminal, in this case, the first network device may seek, for the first network device and the target terminal, a new access network device for providing a time provision service. In this case, the time provision request sent by the first network device may include an identifier of the target terminal, so that the second network device allocates, to the first network device and/or the target terminal, a device for providing a time provision service.

Step 302b: The first access network device sends the first clock status message to the target terminal.

Optionally, the first access network device may send the first clock message to the target terminal, so that the target terminal can determine, based on the clock status that is of the first access network device and that is indicated by the first clock status message, whether a new access network device for providing a time provision service needs to be sought for the target terminal. Further, when the first access network device provides a time provision service for both the target terminal and the first network device, the target terminal may alternatively seek, for the target terminal and the first network device, a new access network device for providing a time provision service.

Content indicated by the first clock status message sent by the first access network device to the target terminal is similar to content indicated by the first clock status message sent to the first network device, and details are not described herein again.

In a possible implementation, the first access network device may not be capable of directly sending the first clock status message to the target terminal, but needs forwarding by another device. In this case, when receiving the first clock status message, the target terminal needs to determine a source device that sends the first clock status message. For example, if a RAN 2 currently provides a time provision service for UE 1, but the UE 1 is not within a coverage area of UE 2 but is within a coverage area of a RAN 1, a clock status message of the RAN 2 needs to be forwarded by the RAN 1. When receiving a clock status message sent by the RAN 1, if determining that a source device that sends the message is the RAN 2, the UE 1 determines a clock status of the RAN 2 based on the clock status message.

Step 303b: The target terminal sends a time provision request to a second network device, where the time provision request is used to request to provide a time provision service for the target terminal and/or the first network device.

For example, if the first clock status message indicates that the first access network device encounters a clock failure currently but can continue to provide a time provision service within the provided start/stop time, the time provision request sent by the target terminal device may be used to request the second network device to allocate, for the target terminal within the provided start/stop time, a new device for providing a time provision service. In this case, the time provision request sent by the target terminal may include indication information of the clock failure of the first access network device, and may further include the indication information of the provided start/stop time.

For another example, if the first clock status message indicates that the first access network device encounters a clock failure currently and cannot provide a time provision service, the time provision request sent by the target terminal may be used to request the second network device to immediately allocate, to the target terminal, a new device for providing a time provision service. In this case, the time provision request sent by the target terminal may include indication information of the clock failure of the first access network device.

For another example, if the first clock status message indicates that a clock failure of the first access network device has been recovered, the time provision request sent by the target terminal may be used to request to recover a time provision service provided by the first access network device for the target terminal. In this case, the time provision request sent by the target terminal may include indication information of the clock failure recovery of the first access network device, to notify the second network device that the target terminal expects the first access network device to continue to provide a time provision service.

Further, the time provision request sent by the target terminal may further include one or any combination of a requirement of the target terminal for time provision accuracy, a requirement of the target terminal for a time provision clock source, and a requirement of the target terminal for a time provision service type, so that the second network device determines, for the first network device and/or the target terminal based on the requirement of the first network device and/or the target terminal, an appropriate device for providing a time provision service. The time provision service type may be determined by a data network name (data network name, DNN) or single network slice selection assistance information (signal network slice selection assistance information, S-NSSAI) carried when the terminal sends the request, or may be further defined in a subsequent standard.

When performing the foregoing step, the target terminal may send the time provision request to the first access network device, so that the first access network device forwards the time provision request to the second network device. After receiving the time provision request sent by the target terminal, the first access network device may send the time provision request to the second network device through another core network device. For example, the first access network device may send the time provision request to the second network device through an AMF.

In some scenarios, the first access network device provides a time provision service for both the target terminal and the first network device. In this case, the time provision request sent by the target terminal may further include an identifier of the first network device, so that the second network device selects, for the first network device and the target terminal, an access network device for providing a time provision service. In some other scenarios, the first access network device provides a time provision service for the target terminal, and another device provides a time provision service for the first network device. For example, a core network device provides a time provision service for the first network device or a device outside a mobile communication system provides a time provision service for the first network device. In this case, the time provision request sent by the target terminal does not need to carry the identifier of the first network device.

Step 304: The second network device determines, based on the received time provision request, an access network device for providing a time provision service for the first network device and/or the target terminal.

As described above, if the time provision request that is sent by the first network device and that is received by the second network device includes the identifier of the target terminal, the second network device allocates, to the first network device and the target terminal device, an access network device for providing a time provision service.

If the time provision request that is sent by the target terminal and that is received by the second network device includes the identifier of the first network device, the second network device allocates, to the first network device and the target terminal, an access network device for providing a time provision service. If the time provision request that is sent by the target terminal and that is received by the second network device does not include the identifier of the first network device, the second network device allocates, to the target terminal, an access network device for providing a time provision service.

When the time provision request received by the second network device indicates that the first access network device that currently provides a time provision service for the first network device and/or the target terminal encounters a clock failure, the second network device may determine that a second access network device is to provide a time provision service for the first network device and/or the target terminal.

Optionally, if the time provision request further includes the indication information of the provided start/stop time, the second network device needs to determine, within the provided start/stop time, the access network device for providing a time provision service for the first network device and/or the target terminal.

Further, if the time provision request received by the second network device includes one or more of a time provision accuracy requirement, a time provision clock source requirement, and a time provision service type requirement, the second network device may determine the second access network device based on these requirements.

When the time provision request received by the second network device indicates that the clock failure of the first access network device has been recovered, the second network device may determine whether the first access network device continues to provide a time provision service for the first network device and/or the target terminal. For example, the second network device may compare clock information of the first access network device with clock information of the second access network device that currently provides a time provision service, to determine whether the clock of the first access network device is more suitable for a time provision requirement of the target terminal and the first network device. If the first access network device is more suitable, the first access network device continues to provide a time provision service for the target terminal and the first network device. Alternatively, if the second network device determines that the clock information of the first access network device can meet a time provision requirement of the target terminal and the first network device, and the first access network device is an access network device that currently provides a radio access service for the target terminal, the first access network device is preferentially used to provide a time provision service for the target terminal and the first network device.

Step 305: The second network device modifies time provision configuration context information of the first network device and/or the target terminal. The time provision configuration context information includes information about a device for providing a time provision service for the first network device and/or the target terminal.

When the first access network device encounters a failure, if the second network device determines that the second access network device is to provide a time provision service for the target terminal and/or the first network device, the second network device modifies, to the second access network device, the information that is in the time provision configuration context information of the first network device and/or the target terminal and that indicates the device for providing a time provision service.

Optionally, after performing step 305, the second network device may send time provision indication information to the determined device, so that the determined device provides a time provision service for the first network device and/or the target terminal. Alternatively, step 305 may be performed to trigger another core network device to send time provision indication information to the determined device for providing a time provision service.

For example, the determined device for providing a time provision service is the second access network device. The time provision indication information may include the identifier of the target terminal and/or the identifier of the first network device, so that the second access network device provides a time provision service for the target terminal and/or the first network device. Further, the time provision indication information may further include an identifier of the first access network device. If the target terminal is not within a coverage area of the second access network device, the second access network device may further provide a time provision service for the target terminal through the first access network device.

Correspondingly, after receiving the time provision indication information, the second access network device sends time provision reference information to the first network device and/or the target terminal, to provide a time provision service for the first network device and/or the target terminal.

When a failure of the first access network device is recovered, if the second network device determines that the first access network device is to provide a time provision service for the target terminal and/or the first network device, the second network device modifies, to the first access network device, the information that is in the time provision configuration context information of the first network device and/or the target terminal and that indicates the device for providing a time provision service. Then, the second network device sends time provision indication information to the first access network device, or another core network device sends time provision indication information to the first access network device based on the time provision configuration context information. The time provision indication information may include the identifier of the target terminal and/or the identifier of the first network device, so that the first access network device provides a time provision service for the target terminal and/or the first network device.

Correspondingly, after receiving the time provision indication information, the first access network device sends time provision reference information to the first network device and/or the target terminal, to provide a time provision service for the first network device and/or the target terminal.

In the foregoing embodiment, the second network device learns of the clock status of the first access network device based on the time provision request sent by the first network device or the target terminal. In another possible implementation, the first access network device may alternatively send the clock status of the first access network device to the second network device through a second clock status message, so that the second network device can obtain the clock status of the first access network device in a timely manner, to select, for a network device and/or a terminal based on the clock status of the first access network device, a device for providing a time provision service. For example, if a RAN 1 that provides a time provision service for a UPF 1 and UE 1 encounters a clock failure, a T-NF is requested to allocate a new RAN for providing a time provision service, and the T-NF determines, based on a second clock status message sent by a RAN 2, that a clock of the RAN 2 is normal, and determines, based on a second clock status message sent by a RAN 3, that the RAN 3 encounters a clock failure, the RAN 2 is selected to provide a time provision service for the UPF 1 and the UE 1.

Further, the second clock status message may further include information about a time provision object. For example, if the second clock status message indicates that the current clock status of the first access network device is the foregoing state 1 or state 2, the time provision object is a device that is currently provided with a time provision service by the first access network device, and the first access network device expects a first network to allocate, to the time provision object, a device for providing a time provision service. If the second clock status message indicates that the current clock status of the first access network device is the foregoing state 3, the time provision object indicates that the first access network device is expected to provide a time provision service for the time provision object, and the second network device determines whether the first access network device is to provide a time provision service for the time provision object. The time provision object may include the first network device and the target terminal. The second network device may determine, based on the clock status of the first access network device and the time provision object of the first access network device, whether an access network device for providing a time provision service needs to be replaced for the time provision object. If the second clock status message does not include time provision object information, it may be understood that whether a device for providing a time provision service needs to be replaced needs to be determined for each device impacted by the clock status of the first access network device.

When the second clock status message indicates that the clock failure of the first access network device has been recovered, the second clock status message may further include recovered clock information, for example, clock accuracy information and clock source information, so that the second network device selects, for a terminal and a core network device based on the clock information of the first access network device, an appropriate access network device for providing a time provision service.

For example, if a second clock status message sent by a RAN 1 to a T-NF indicates that the RAN 1 encounters a clock failure, and time provision objects are a UPF 1 and UE 1, the T-NF may select, for the UPF 1 and the UE 1, a RAN 2 for providing a time provision service. When the UPF 1 sends a time provision request to the T-NF, to request to allocate, to the UPF 1 and the UE 1, a new RAN for providing a time provision service, the T-NF may quickly respond, and send time provision indication information to the RAN 2, so that the RAN 2 provides a time provision service for the UPF 1 and the UE 1. Alternatively, after determining that the RAN 2 is to provide a time provision service for the UPF 1 and the UE 1, the T-NF may send the time provision indication information to the RAN 2 without waiting for the time provision request sent by the UPF 1, so that the RAN 2 provides a time provision service for the UPF 1 and the UE 1. In this case, the UPF 1 and the UE 1 may not need to send the time provision request to the T-NF.

For another example, if a second clock status message sent by a RAN 1 to a T-NF indicates that a clock failure of the RAN 1 has been recovered, and time provision objects are a UPF 1 and UE 1, it indicates that the RAN 1 requests to resume providing a time provision service for the UPF 1 and the UE 1. The T-NF may determine, based on clock information of the RAN 1 and clock information of a RAN 2 that currently provides a time provision service for the UPF 1 and the UE 1, that the RAN 1 better meets a requirement of the UE 1 for clock accuracy and/or a clock source. Alternatively, when the RAN 1 can meet a requirement of the UE 1 for clock accuracy and/or a clock source, and the UE 1 is not within a coverage area of the RAN 2, it is determined that the RAN 1 resumes providing a time provision service for the UPF 1 and the UE 1.

In the foregoing embodiments, an example in which the second network device determines a device that can provide a time provision service for the first network device and the target terminal is used. However, in some scenarios, after the first access network device encounters a clock failure, and the first network device and/or the target terminal sends a time provision request to the second network device, the second network device may not find a device that can provide a time provision service for the first network device and/or the target terminal, or may not find, within the provided start/stop time, a device that can provide a time provision service for the first network device and/or the target terminal. In this case, the second network device may send a time provision notification to a third network device, where the time provision notification indicates that a device that can provide a time provision service for the first network device and/or the target terminal is not found, so that the third network device determines whether to abandon a clock synchronization requirement for the first network device and/or the target terminal, or the third network device selects, for the first network device and/or the target terminal, another access network device for providing a time provision service, or the third network device modifies a requirement of the first network device and/or the target terminal for time provision accuracy, a time provision clock source, and/or a time provision service type. The third network device returns a time provision notification response to the second network device, to notify the second network device of a decision of the third network device. If the third network device decides to modify the requirement of the first network device and/or the target terminal for the time provision accuracy, the time provision clock source, and/or the time provision service type, a modified requirement is carried in the time provision notification response. In this case, the time provision notification response plays a role of a time provision request, that is, requests the second network device to reselect, for the first network device and/or the target terminal based on the modified requirement, a device for providing a time provision service.

The third network device may be a TSN AF in a 5G communication system, or may be a network device configured to perform TSN system time provision management in another mobile communication system. When the second network device sends the time provision notification to the third network device, the time provision notification may need to be forwarded by using another device, for example, may be forwarded by using a network exposure function (network exposure function, NEF). Correspondingly, when the third network device sends the time provision notification response to the second network device, the time provision notification response may also be forwarded by using another device. The another device used for forwarding may directly forward the information without processing the forwarded information, or may process the information and then forward processed information.

Further, the time provision notification may include a requirement of the target terminal and/or the first network device for clock accuracy, a clock source, and a time provision service type, so that the third network device selects, based on the clock accuracy requirement and/or the clock source requirement, an access network device for providing a time provision service.

In addition, the time provision notification may further include information about one or more candidate devices for providing a time provision service, so that the third network device selects, from the candidate devices, a device for providing a time provision service for the first network device and/or the target terminal. However, when the time provision notification includes the information about the candidate devices, it does not mean that the third network device needs to select, from the candidate devices, a device for providing a time provision service for the first network device and/or the target terminal, but the third network device may determine to abandon the clock synchronization requirement for the first network device and/or the target terminal, or may select another device to provide a time provision service for the first network device and/or the target terminal.

Optionally, the time provision notification may further include one or any combination of the following information: the identifier of the first network device, the identifier of the target terminal, and an interface identifier of a DS-TT corresponding to the target terminal.

As described above, the second network device may receive the second clock status information sent by the first access network device or the like. In a possible implementation, after receiving the second clock status message, the second network may further send the clock status information of the device to the third network device. After receiving the clock status information, the third network device may determine whether to abandon a clock synchronization requirement for a time provision object impacted by the clock status. If the third network device determines not to abandon the clock synchronization requirement, the third network device may send a time provision request to the second network device, to request the second network device to select a new device to provide a time provision service for the time provision object. Further, the third network device may further determine whether to modify a time provision requirement (such as a time provision accuracy requirement, a time provision clock source requirement, and a time provision service type requirement) of the time provision object, and include a modified time provision requirement in the time provision request, so that the second network device reselects, for the time provision object based on the modified time provision requirement, a device for providing a time provision service.

Optionally, the clock status message sent by the second network device to the third network device may further include an identifier of the time provision object, and the identifier of the time provision object may be a time provision object identifier included in the second clock status message received by the second network device. Alternatively, if the second clock status message does not include the time provision object identifier, the second network device may determine the time provision object impacted by the clock status.

In a possible implementation, the third network device may send a time provision request to the second network device according to an indication of a user, where the request includes information about a time provision object, to request the second network device to select or reselect, for the time provision object, a device for providing a time provision service. Optionally, the time provision request sent by the third network device may include one or more of information such as an identifier of the time provision object, a time provision accuracy requirement, a time provision clock source requirement, a time provision service type requirement, and a coverage area, the coverage area may indicate that a terminal in the area is to be used as a time provision object, and the time provision accuracy requirement, the time provision clock source requirement, and the time provision service type requirement indicate requirements of the time provision object for a time provision service, so that the second network device selects a device that meets the foregoing requirements to provide a time provision service. For example, if the user indicates to select, for a terminal in a coverage area A, an access network device that can provide a microsecond-level time provision service, a TSN AF sends a time provision request to a T-NF, where the time provision request includes indication information of the coverage area A and indication information indicating that time provision accuracy is at a microsecond level. In this implementation, even if an access network device that currently provides a time provision service for the terminal does not encounter a clock failure, because a requirement of the user changes, an access network device that is for providing a time provision service and that meets the requirement of the user can still be reselected for the terminal.

As described above, the first network device may not be provided with a time provision service by the access network device. In this case, the clock synchronization method provided in this embodiment of this application may also be applied to a device that provides a time provision service for the first network device and the first network device. For example, if a device A in a core network provides a time provision service for a UPF, the device A may send clock status information to the UPF, to notify the UPF of a clock status of the device A, and the UPF may send a time provision request to a T-NF based on the clock status information sent by the device A. Content indicated by the clock status information and the time provision request is similar to that in the foregoing embodiment, and is not exemplified herein again.

According to the clock status synchronization method provided in the foregoing embodiment, when the clock status of the first access network device changes, the first access network device may notify the first network device and/or the target terminal of the current clock status, so that the first network device and/or the target terminal can obtain the clock status of the first access network device in a timely manner, and determine, based on the clock status of the first access network device, whether a new device needs to be sought to provide a time provision service for the first network device and/or the target terminal. This resolves a time provision problem of the first network device and the target terminal when the access network device encounters a clock failure, and ensures a requirement of the first network device and the target terminal for a time provision service. Further, the foregoing method further helps complete time synchronization with a TSN system based on time synchronization in a mobile communication system.

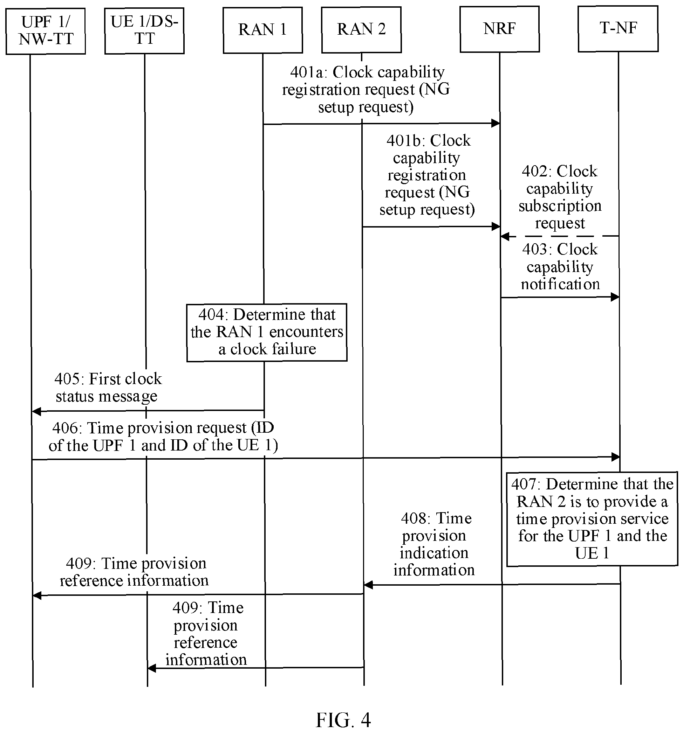

To understand the foregoing embodiments of this application more clearly, the following provides example descriptions with reference to FIG. 4 to FIG. 8.

FIG. 4 is an example of a schematic flowchart of a clock status synchronization method. As shown in the figure, the method may include the following steps.

Step 401a: ARAN 1 sends a clock capability registration request (NG setup request) to an NRF.

The request may include an identifier of the RAN 1, time provision accuracy of the RAN 1, and clock source information of the RAN 1. Optionally, encryption information may be further included.

Step 401b: A RAN 2 sends a clock capability registration request (NG setup request) to the NRF.

The request may include an identifier of the RAN 2, time provision accuracy of the RAN 2, and clock source information of the RAN 2. Optionally, encryption information may be further included.

Step 402: A T-NF sends a clock capability subscription request to the NRF, to request to obtain capability information of a network element that can provide a time provision service.

A sequence of step 401a, step 401b, and step 402 is not limited in this embodiment of this application.

Step 403: The NRF sends a clock capability notification to the T-NF.

The clock capability notification may include clock capability information that is obtained by the NRF and that is of the network element that can provide a time provision service. For example, the clock capability notification includes the identifier of the RAN 1, the time provision accuracy of the RAN 1, the clock source information of the RAN 1, the encryption information of the RAN 1, the identifier of the RAN 2, the time provision accuracy of the RAN 2, the clock source information of the RAN 2, and the encryption information of the RAN 2.

Optionally, the T-NF may not need to perform step 402, and the NRF sends, periodically or in a triggered manner, the clock capability notification to the T-NF according to a communication protocol.

Step 404: The RAN 1 determines that the RAN 1 encounters a clock failure.

Optionally, the RAN 1 may determine that a current status is a clock failed state (that is, state 2), and a time provision service cannot be provided for UE 1 provided with a DS-TT functional module and a UPF 1 provided with an NW-TT functional module. Alternatively, the RAN 1 may determine that a current status is a clock failure holding state (that is, state 1), a time provision service can still be provided for the UE 1 and the UPF 1 within a provided start/stop time A, but after the provided start/stop time A expires, time provision accuracy cannot be ensured.

Step 405: The RAN 1 sends a first clock status message to the UPF 1.

The first clock status message may include the identifier of the RAN 1. Optionally, the first clock status message may further include indication information indicating that the RAN 1 is currently in the state 1 or the state 2. If the current status of the RAN 1 is the state 1, the first clock status message may further include indication information of the provided start/stop time A.

Step 406: The UPF 1 sends a time provision request to the T-NF.

The time provision request may include an identifier of the UPF 1 and an identifier of the UE 1, to request the T-NF to select another RAN to provide a time provision service for the UPF 1 and the UE 1. The time provision request may further include the identifier of the RAN 1, indicating that the RAN 1 currently provides a time provision service for the UPF 1 and the UE 1. Optionally, the time provision request may further include a time provision accuracy requirement, a clock source requirement, and a time provision service type requirement of the UPF 1 and/or the UE 1. If the current status of the RAN 1 is the state 1, the time provision request may further include the indication information of the provided start/stop time A.

Step 407: The T-NF determines that the RAN 2 is to provide a time provision service for the UPF 1 and the UE 1.

Optionally, the T-NF may determine, based on the time provision accuracy requirement and the clock source requirement of the UPF 1 and/or the UE 1 and the obtained clock capability information of the RAN 2, that the RAN 2 can meet the time provision accuracy requirement and the clock source requirement of the UPF 1 and/or the UE 1, and the RAN 2 is to provide a time provision service for the UPF 1 and the UE 1.

Optionally, after step 407, the T-NF may further send a time provision request response to the UPF 1, where the response includes the identifier of the RAN 2, so that the UPF 1 learns that the RAN 2 is to provide a time provision service for the UPF 1 and the UE 1.

Step 408: The T-NF sends time provision indication information to the RAN 2.

The time provision indication information may include the identifier of the UPF 1 and the identifier of the UE 1, so that the RAN 2 provides a time provision service for the UPF 1 and the UE 1.

Step 409: The RAN 2 sends time provision reference information to the UPF 1 and the UE 1.

The time provision reference information is used to provide a time provision service for the UPF 1 and the UE 1.

Optionally, after step 404, the RAN 1 may send second clock status information to the T-NF, so that after determining that the RAN 1 encounters a clock failure, the T-NF selects a new RAN for time provision for a time provision object of the RAN 1. Optionally, the second clock status information may include identifiers of time provision objects, and the T-NF selects a new RAN for time provision for the time provision objects corresponding to the identifiers.

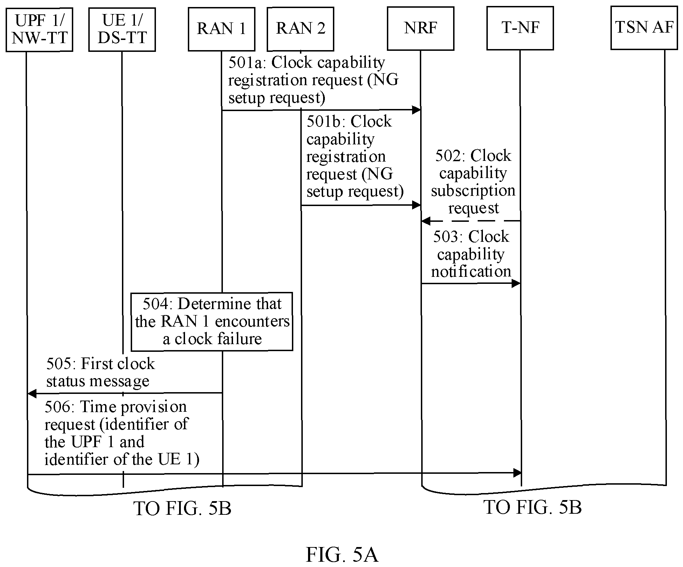

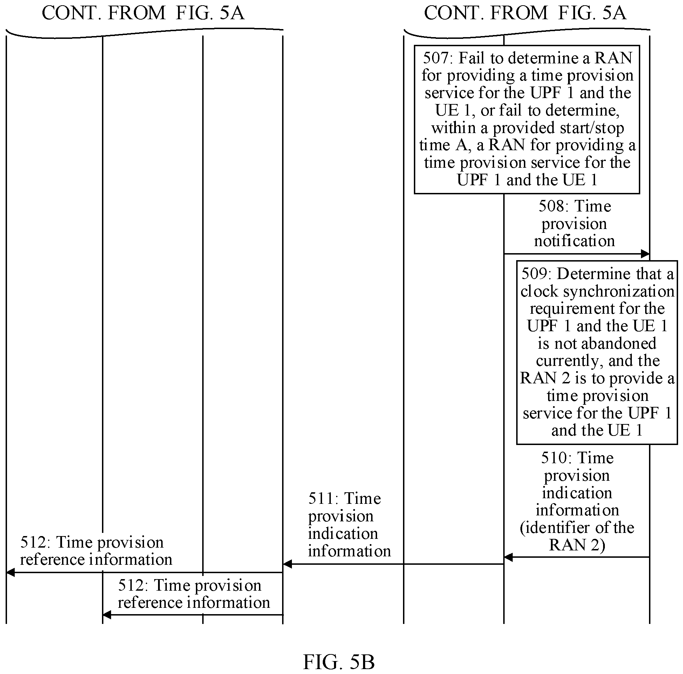

In a specific embodiment shown in FIG. 5A and FIG. 5B, a T-NF fails to determine a RAN for providing a time provision service for a UPF 1 and UE 1. A specific procedure is as follows:
Step 501 to step 506 are consistent with step 401 to step 406, and details are not described herein again.
Step 507: The T-NF fails to determine a RAN for providing a time provision service for the UPF 1 and the UE 1, or fails to determine, within the provided start/stop time A, a RAN for providing a time provision service for the UPF 1 and the UE 1.
Step 508: The T-NF sends a time provision notification to a TSN AF.

The time provision notification is used to notify the TSN AF that a RAN that currently provides a time provision service for the UPF 1 and the UE 1 encounters a clock failure and whether a clock synchronization requirement for the UPF 1 and the UE 1 is abandoned currently.

Optionally, the time provision notification may include identifiers of the UPF 1 and the UE 1, indication information indicating that the RAN 1 encounters a clock failure, an identifier of the candidate RAN 2, clock capability information of the RAN 2, and the like.

Step 509: The TSN AF determines that the clock synchronization requirement for the UPF 1 and the UE 1 is not abandoned currently, and the RAN 2 is to provide a time provision service for the UPF 1 and the UE 1.

Step 510: The TSN AF sends time provision indication information to the T-NF, where the time provision indication information includes the identifier of the RAN 2.

Step 511: The T-NF sends time provision indication information to the RAN 2.

The time provision indication information may include the identifier of the UPF 1 and the identifier of the UE 1, so that the RAN 2 provides a time provision service for the UPF 1 and the UE 1.

Step 512: The RAN 2 sends time provision reference information to the UPF 1 and the UE 1.

The time provision reference information is used to provide a time provision service for the UPF 1 and the UE 1.

Optionally, after step 504, the RAN 1 may send second clock status information to the T-NF, so that after determining that the RAN 1 encounters a clock failure, the T-NF selects a new RAN for time provision for a time provision object of the RAN 1, and sends a time provision notification to the TSN AF if no appropriate RAN is determined. Optionally, the second clock status information may include identifiers of time provision objects, and the T-NF selects a new RAN for time provision for the time provision objects corresponding to the identifiers.

Optionally, the RAN 1 may also send the first clock status message to the UE 1, and then the UE 1 sends a time provision request to the T-NF.

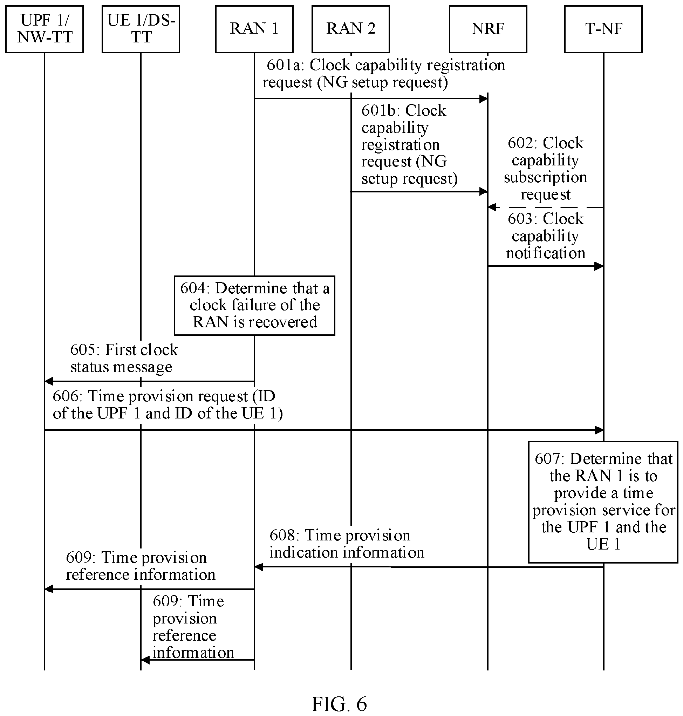

In a specific embodiment shown in FIG. 6, a clock failure of a RAN 1 is recovered. As shown in FIG. 6, a clock status synchronization procedure may include the following steps.

Step 601 to step 603 are consistent with step 401 to step 403, and details are not described herein again.

Step 604: The RAN 1 determines that the clock failure of the RAN is recovered.

Step 605: The RAN 1 sends a first clock status message to the UPF 1.

The first clock status message may include the identifier of the RAN 1. Optionally, the first clock status message may further include indication information indicating that the RAN 1 is currently in the state 3.

Step 606: The UPF 1 sends a time provision request to the T-NF.

The time provision request may include the identifier of the UPF 1, the identifier of the UE 1, the identifier of the RAN 1, and indication information of the clock failure recovery of the RAN 1. Optionally, clock information obtained after the clock failure recovery of the RAN 1 may be further included.

Step 607: The T-NF determines that the RAN 1 is to provide a time provision service for the UPF 1 and the UE 1.

Optionally, the T-NF may determine, based on a time provision accuracy requirement, a clock source requirement, and a time provision service type requirement of the UPF 1 and/or the UE 1 and the clock information obtained after the clock failure recovery of the RAN 1, that the RAN 1 can meet the time provision accuracy requirement, the clock source requirement, and the time provision service type requirement of the UPF 1 and/or the UE 1, and the RAN 1 is to provide a time provision service for the UPF 1 and the UE 1.

Step 608: The T-NF sends time provision indication information to the RAN 1.

The time provision indication information may include the identifier of the UPF 1 and the identifier of the UE 1, so that the RAN 1 provides a time provision service for the UPF 1 and the UE 1.

Step 609: The RAN 1 sends time provision reference information to the UPF 1 and the UE 1.

The time provision reference information is used to provide a time provision service for the UPF 1 and the UE 1.

Optionally, in step 605, the RAN 1 may also send the first clock status message to the UE 1, and then the UE 1 sends a time provision request to the T-NF.

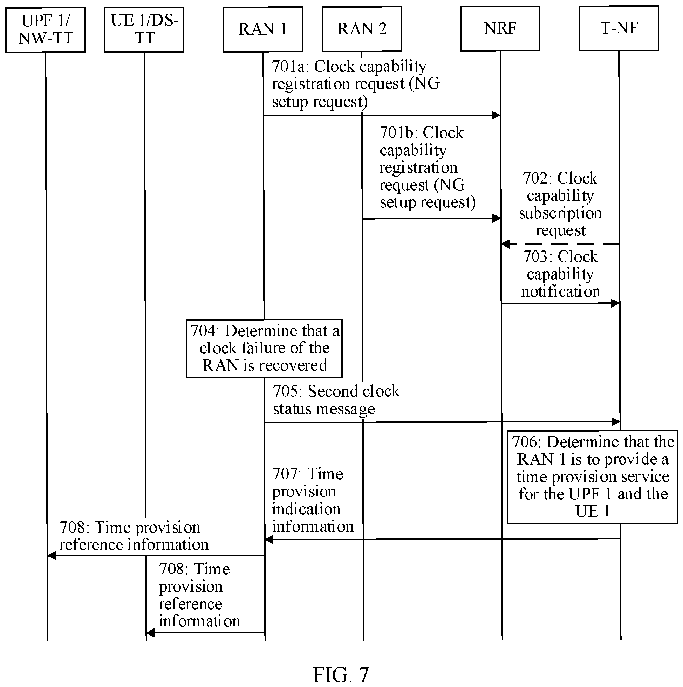

In a specific embodiment shown in FIG. 7, a clock failure of a RAN 1 is recovered, and the RAN 1 notifies a T-NF that the clock failure of the RAN 1 has been recovered. As shown in FIG. 7, a clock status synchronization procedure may include the following steps.

Step 701 to step 704 are consistent with step 601 to step 604, and details are not described herein again.

Step 705: The RAN 1 sends a second clock status message to the T-NF.

The second clock status message may include the identifier of the RAN 1. Optionally, the second clock status message may further include indication information indicating that the RAN 1 is currently in the state 3. The second clock status message may further include recovered clock information. The second clock status message may further include identifiers of the UPF 1 and the UE 1, indicating a request for providing a time provision service for the UPF 1 and the UE 1.

Step 706: The T-NF determines that the RAN 1 is to provide a time provision service for the UPF 1 and the UE 1.

Optionally, the T-NF may determine, based on a time provision accuracy requirement, a clock source requirement, and a time provision service type requirement of the UPF 1 and/or the UE 1 and the clock information obtained after the clock failure recovery of the RAN 1, that the RAN 1 can meet the time provision accuracy requirement, the clock source requirement, and the time provision service type requirement of the UPF 1 and/or the UE 1, and the RAN 1 is to provide a time provision service for the UPF 1 and the UE 1.

Step 707: The T-NF sends time provision indication information to the RAN 1.

The time provision indication information may include the identifier of the UPF 1 and the identifier of the UE 1, so that the RAN 1 provides a time provision service for the UPF 1 and the UE 1.

Step 708: The RAN 1 sends time provision reference information to the UPF 1 and the UE 1.

The time provision reference information is used to provide a time provision service for the UPF 1 and the UE 1.

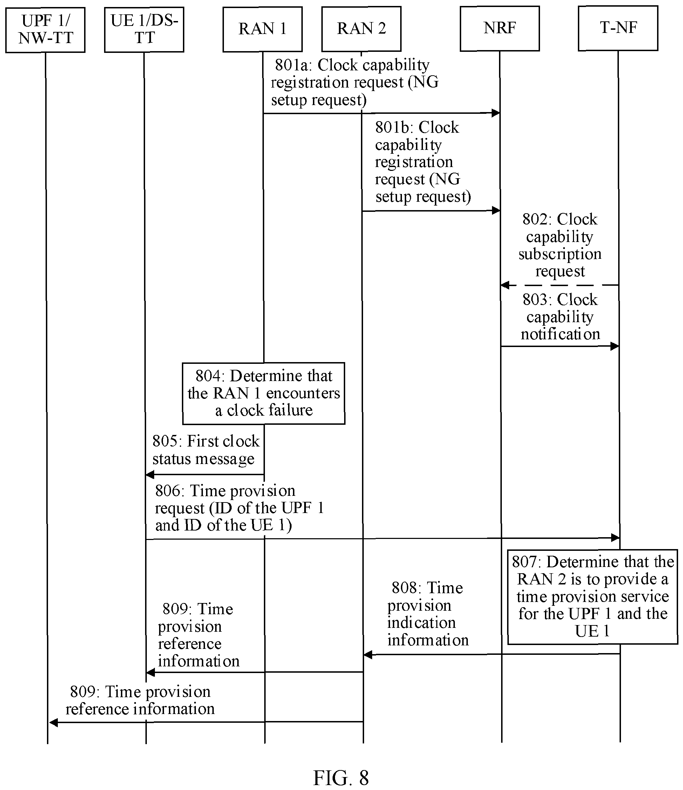

In the embodiments shown in FIG. 4 to FIG. 7, the RAN 1 sends the clock status message to the UPF 1, and the UPF 1 seeks, for the UE 1, an access network device for providing a time provision service. In an embodiment shown in FIG. 8, a RAN 1 may send a clock status message to UE 1. A clock status synchronization procedure may specifically include the following steps.

Step 801 to step 804 are consistent with step 401 to step 404, and details are not described herein again.

Step 805: The RAN 1 sends a first clock status message to the UE 1.

The first clock status message may include the identifier of the RAN 1. Optionally, the first clock status message may further include indication information indicating that the RAN 1 is currently in the state 1 or the state 2. If the current status of the RAN 1 is the state 1, the first clock status message may further include indication information of the provided start/stop time A.

Step 806: The UE 1 sends a time provision request to the T-NF.

The time provision request may include an identifier of the UE 1 and an identifier of the UPF 1, to request the T-NF to select another RAN to provide a time provision service for the UE 1 and the UPF 1. The time provision request may further include the identifier of the RAN 1, indicating that the RAN 1 currently provides a time provision service for the UE 1 and the UPF 1. Optionally, the time provision request may further include a time provision accuracy requirement, a clock source requirement, and a time provision service type requirement of the UE 1 and the UPF 1. If the current status of the RAN 1 is the state 1, the time provision request may further include the indication information of the provided start/stop time A.

Step 807: The T-NF determines that the RAN 2 is to provide a time provision service for the UPF 1 and the UE 1.

Optionally, the T-NF may determine, based on the time provision accuracy requirement and the clock source requirement of the UPF 1, the time provision accuracy requirement, the clock source requirement, and the time provision service type requirement of the UE 1, and obtained clock capability information of the RAN 2, that the RAN 2 can meet the time provision accuracy requirements and the clock source requirements of the UPF 1 and the UE 1, and the RAN 2 is to provide a time provision service for the UPF 1 and the UE 1.

Step 808: The T-NF sends time provision indication information to the RAN 2.

The time provision indication information may include the identifier of the UPF 1 and the identifier of the UE 1, so that the RAN 2 provides a time provision service for the UPF 1 and the UE 1.

Step 809: The RAN 2 sends time provision reference information to the UE 1 and the UPF 1.

The time provision reference information is used to provide a time provision service for the UE 1 and the UPF 1.

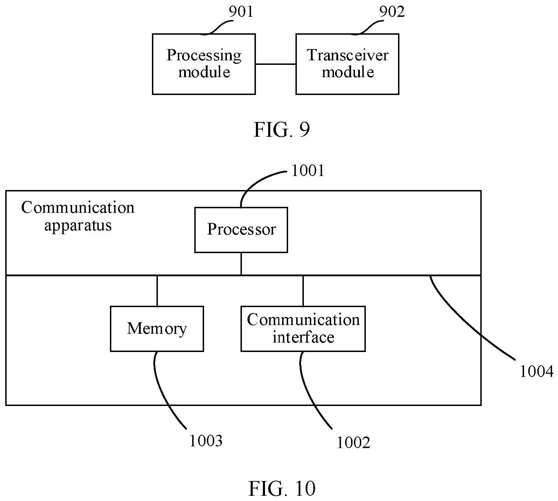

FIG. 9 is a diagram of a communication apparatus according to an embodiment of this application. The communication apparatus includes a processing module 901 and a transceiver module 902. The processing module 901 is configured to implement data processing of the communication apparatus. The transceiver module 902 is configured to perform information receiving and sending processing in the foregoing method embodiments. It should be understood that the processing module 901 in this embodiment of this application may be implemented by a processor or a processor-related circuit component (or referred to as a processing circuit), and the transceiver module 902 may be implemented by a receiver or a receiver-related circuit component and a transmitter or a transmitter-related circuit component.

For example, the communication apparatus may be a communication apparatus device, or may be a chip used in the communication apparatus device or another combined component or part that has a function of the communication apparatus device.

When the communication apparatus is a first access network device, the processing module 901 is configured to determine a current clock status of the first access network device; and the transceiver module 902 is configured to send a clock status message to a first network device, a target terminal, and/or a second network device, where the clock status message indicates the current clock status.

In addition, the foregoing modules may be further configured to support another process performed by the first access network device in the embodiments shown in FIG. 3 to FIG. 8 and any implementation thereof. For beneficial effects, refer to the foregoing descriptions. Details are not described herein again.

When the communication apparatus is a first network device, the transceiver module 902 is configured to: receive a clock status message, where the clock status message indicates a current clock status of a device that provides a time provision service for the first network device; and send, under control of the processing module 901, a time provision request to a second network device based on the clock status message, where the time provision request is used to request to obtain a device for providing a time provision service for the first network device and/or a target terminal.

In addition, the foregoing modules may be further configured to support another process performed by the first network device in the embodiments shown in FIG. 3 to FIG. 8 and any implementation thereof. For beneficial effects, refer to the foregoing descriptions. Details are not described herein again.

When the communication apparatus is a terminal, the transceiver module 902 is configured to: receive a clock status message, where the clock status message indicates a current clock status of a first access network device; and send, under control of the processing module 901, a time provision request to a second network device based on the clock status message, where the time provision request is used to request to obtain an access network device for providing a time provision service for the terminal and/or a first network device.

In addition, the foregoing modules may be further configured to support another process performed by the terminal in the embodiments shown in FIG. 3 to FIG. 8 and any implementation thereof. For beneficial effects, refer to the foregoing descriptions. Details are not described herein again.

When the communication apparatus is a second network device, the transceiver module 902 is configured to receive a time provision request, where the time provision request is used to request an access network device for providing a time provision service for a first network device and/or a target terminal; and the processing module 901 is configured to: determine the device for providing a time provision service for the first network device and/or the target terminal; and modify time provision configuration context information of the first network device and/or the target terminal, where the time provision configuration context information includes information about the device for providing a time provision service for the first network device and/or the target terminal.

In addition, the foregoing modules may be further configured to support another process performed by the second network device in the embodiments shown in FIG. 3 to FIG. 8 and any implementation thereof. For beneficial effects, refer to the foregoing descriptions. Details are not described herein again.

When the communication apparatus is a third network device, the transceiver module 902 is configured to: receive a time provision notification from a second network device, where the time provision notification indicates that the second network device does not determine, for a first network device and/or a target terminal, a device for providing a time provision service; or indicates clock status information of a device that is for providing a time provision service and that is currently determined for a first network device and/or a target terminal; and send, under control of the processing module 901, a time provision notification response to the second network device, where the time provision notification response indicates to abandon a clock synchronization requirement for the first network device and/or the target terminal; or the time provision notification response includes information about an access network device that is for providing a time provision service and that is determined for the first network device and/or the target terminal; or the time provision notification response includes updated time provision requirement information of the first network device and/or the target terminal, the time provision requirement information includes one or any combination of the following: a time provision accuracy requirement, a time provision clock source requirement, and a time provision service type, and the authorization notification response indicates the second network device to determine, for the first network device and/or the target terminal based on the updated time provision accuracy requirement and/or time provision clock source requirement, another device for providing a time provision service.

In addition, the foregoing modules may be further configured to support another process performed by the third network device in the embodiments shown in FIG. 3 to FIG. 8 and any implementation thereof. For beneficial effects, refer to the foregoing descriptions. Details are not described herein again.

Based on a same technical concept, an embodiment of this application further provides a communication apparatus. The communication apparatus includes a processor 1001 and a communication interface 1002 connected to the processor 1001 that are shown in FIG. 10.

The processor 1001 may be a general-purpose processor, a microprocessor, an application-specific integrated circuit (application-specific integrated circuit, ASIC), a field programmable gate array (field programmable gate array, FPGA) or another programmable logic device, a discrete gate or a transistor logic device, one or more integrated circuits configured to control program execution in the solutions of this application, or the like. The general-purpose processor may be a microprocessor, or may be any conventional processor or the like. The steps of the method disclosed with reference to embodiments of this application may be directly performed by a hardware processor, or may be performed by a combination of hardware and software modules in the processor.

The communication interface 1002 is configured to communicate with another device or a communication network by using any apparatus like a transceiver, for example, a RAN.

In embodiments of this application, the processor 1001 is configured to invoke the communication interface 1002 to perform a receiving function and/or a sending function, and perform the user plane function disaster recovery method according to any one of the foregoing possible implementations.

Further, the communication apparatus may further include a memory 1003 and a communication bus 1004.

The memory 1003 is configured to store program instructions and/or data, so that the processor 1001 invokes the instructions and/or the data stored in the memory 1003, to implement the foregoing functions of the processor 1001. The memory 1003 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM) or any other medium capable of carrying or storing expected program code in a form of an instruction or a data structure and capable of being accessed by a computer. However, this is not limited. The memory 1003 may exist independently, for example, an off-chip memory, and is connected to the processor 1001 through the communication bus 1004. The memory 1003 may alternatively be integrated with the processor 1001.

The communication bus 1004 may include a path for transmitting information between the foregoing components.

For example, the communication apparatus may be the terminal device in the foregoing method embodiments, or may be the network device in the foregoing method embodiments.

The processor 1001 is configured to implement a data processing operation of the communication apparatus, and the communication interface 1002 is configured to implement a receiving operation and a sending operation of the communication apparatus.

When the communication apparatus is a first access network device, the processor 1001 performs the following steps by using the communication interface 1002: determining a current clock status of the first access network device; and sending a clock status message to a first network device, a target terminal, or a second network device, where the clock status message indicates the current clock status.

In addition, the foregoing modules may be further configured to support another process performed by the first access network device in the embodiments shown in FIG. 3 to FIG. 8 and any implementation thereof. For beneficial effects, refer to the foregoing descriptions. Details are not described herein again.

When the communication apparatus is a first network device, the processor 1001 performs the following steps by using the communication interface 1002: receiving a clock status message, where the clock status message indicates a current clock status of a source device that sends the clock status message; and sending a time provision request to a second network device based on the clock status message, where the time provision request is used to request to obtain a device for providing a time provision service for the first network device and/or a target terminal.

In addition, the foregoing modules may be further configured to support another process performed by the first network device in the embodiments shown in FIG. 3 to FIG. 8 and any implementation thereof. For beneficial effects, refer to the foregoing descriptions. Details are not described herein again.

When the communication apparatus is a terminal, the processor 1001 performs the following steps by using the communication interface 1002: receiving a clock status message, where the clock status message indicates a current clock status of a first access network device; and sending a time provision request to a second network device based on the clock status message, where the time provision request is used to request to obtain an access network device for providing a time provision service for the terminal and/or a first network device.

In addition, the foregoing modules may be further configured to support another process performed by the terminal in the embodiments shown in FIG. 3 to FIG. 8 and any implementation thereof. For beneficial effects, refer to the foregoing descriptions. Details are not described herein again.

When the communication apparatus is a second network device, the processor 1001 performs the following steps by using the communication interface 1002: receiving a time provision request, where the time provision request is used to request a device for providing a time provision service for a first network device and/or a target terminal; determining the device for providing a time provision service for the first network device and/or the target terminal; and modifying time provision configuration context information of the first network device and/or the target terminal, where the time provision configuration context information includes information about the device for providing a time provision service for the first network device and/or the target terminal.

In addition, the foregoing modules may be further configured to support another process performed by the second network device in the embodiments shown in FIG. 3 to FIG. 8 and any implementation thereof. For beneficial effects, refer to the foregoing descriptions. Details are not described herein again.

When the communication apparatus is a third network device, the processor 1001 performs the following steps by using the communication interface 1002: receiving a time provision notification from a second network device, where the time provision notification indicates that the second network device does not determine, for a first network device and/or a target terminal, a device for providing a time provision service; or indicates clock status information of a device that is for providing a time provision service and that is currently determined for a first network device and/or a target terminal; and sending a time provision notification response to the second network device, where the time provision notification response indicates to abandon a clock synchronization requirement for the first network device and/or the target terminal; or the time provision notification response includes information about an access network device that is for providing a time provision service and that is determined for the first network device and/or the target terminal; or the time provision notification response includes updated time provision requirement information of the first network device and/or the target terminal, the time provision requirement information includes one or any combination of the following: a time provision accuracy requirement, a time provision clock source requirement, and a time provision service type, and the authorization notification response indicates the second network device to determine, for the first network device and/or the target terminal based on the updated time provision accuracy requirement and/or time provision clock source requirement, another device for providing a time provision service.

In addition, the foregoing modules may be further configured to support another process performed by the third network device in the embodiments shown in FIG. 3 to FIG. 8 and any implementation thereof. For beneficial effects, refer to the foregoing descriptions. Details are not described herein again.

Based on a same technical concept, an embodiment of this application further provides a computer-readable storage medium. The computer-readable storage medium stores computer-readable instructions. When the computer-readable instructions are run on a computer, the clock status synchronization method in any one of the foregoing possible implementations is performed.

An embodiment of this application provides a computer program product including instructions. When the computer program product runs on a computer, the foregoing method embodiments are performed.

In descriptions of embodiments of this application, the term "and/or" describes an association relationship of associated objects, and indicates that three relationships may exist. For example, A and/or B may indicate the following three cases: Only A exists, both A and B exist, and only B exists. "A plurality of' in this application means two or more than two.

In addition, it should be understood that in the descriptions of this application, words such as "first" "second", and "third" are merely used for distinguishing, and cannot be understood as an indication or implication of relative importance or an indication or implication of a sequence. Reference to "an embodiment", "some embodiments", or the like described in this specification means that specific features, structures, or characteristics described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

An embodiment of this application provides a computer-readable storage medium, storing a computer program. The computer program includes instructions for performing the foregoing method embodiments.

An embodiment of this application provides a computer program product including instructions. When the computer program product runs on a computer, the computer is enabled to perform the foregoing method embodiments.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although example embodiments of this application have been described, persons skilled in the art can make other changes and modifications to these embodiments once they learn the basic inventive concept. Therefore, the appended claims are intended to be construed as including the example embodiments and all changes and modifications falling within the scope of this application.

It is clear that a person skilled in the art can make various modifications and variations to embodiments of this application without departing from the scope of embodiments of this application. Thus, embodiments of this application are intended to cover these modifications and variations, provided that they fall within the scope of the claims of this application and their equivalent technologies.

## Claims

1. A clock status synchronization method, wherein the method comprises:
determining, by a first access network device, a current clock status of the first access network device; and
sending, by the first access network device, a clock status message to a first network device, a target terminal, and/or a second network device, wherein the clock status message indicates the current clock status, wherein
the first network device comprises a device provided with a network-side TSN protocol translation function NW-TT functional module, and the second network device comprises a timing network function T-NF network element.

2. The method according to claim 1, wherein the clock status message comprises any one of the following messages:
a first clock failure message, indicating that the first access network device encounters a clock failure currently;
a second clock failure message, indicating that the first access network device encounters a clock failure currently but is capable of continuing to provide a time provision service within a provided start/stop time; and
a failure recovery message, indicating that a clock of the first access network device has been recovered to normal.

3. The method according to claim 2, wherein the failure recovery message comprises recovered clock information of the first access network device.

4. The method according to claim 2 or 3, wherein when the clock status message comprises the failure recovery message, the method further comprises:
receiving, by the first access network device, time provision indication information sent by the second network device, wherein the time provision indication information indicates the first access network device to provide a time provision service for the first network device and/or the target terminal; and
sending, by the first access network device, time provision reference information to the first network device and/or the target terminal, wherein the time provision reference information is used to provide a time provision service for the first network device and/or the target terminal.

5. The method according to any one of claims 1 to 4, wherein the clock status message sent by the first access network device to the second network device comprises information about a time provision object, and the time provision object comprises a network device and/or a terminal, so that when the first access network device encounters a clock failure, the second network device determines, for the time provision object, another device for providing a time provision service, or when a clock failure of the first access network device is recovered, the second network device determines whether the first access network device is to provide a time provision service for the authorization object.

6. A clock status synchronization method, wherein the method comprises:
receiving, by a first network device, a clock status message, wherein the clock status message indicates a current clock status of a source device that sends the clock status message; and
sending, by the first network device, a time provision request to a second network device based on the clock status message, wherein the time provision request is used to request to provide a time provision service for the first network device and/or a target terminal.

7. The method according to claim 6, wherein the clock status message comprises a first clock failure message, indicating that the source device that sends the clock status message encounters a clock failure currently; and the time provision request is specifically used to request to provide a time provision service for the first network device and/or the target terminal; or
the clock status message comprises a second clock failure message, indicating that the source device that sends the clock status message encounters a clock failure currently but is capable of continuing to provide a time provision service within a provided start/stop time; and the time provision request is specifically used to request to determine, within the provided start/stop time, another device for providing a time provision service for the first network device and/or the target terminal; or
the clock status message comprises a failure recovery message, indicating that a clock of the source device that sends the clock status message has been recovered to normal; and the time provision request is specifically used to request the source device that sends the clock status message to provide a time provision service for the first network device and/or the target terminal.

8. The method according to claim 7, wherein when the clock status message comprises the first clock failure message or the second clock failure message, the method further comprises:
receiving, by the first network device, time provision reference information sent by another device, wherein the time provision reference information is used to provide a time provision service for the first network device.

9. The method according to claim 7, wherein the failure recovery message comprises clock information obtained after the failure recovery; and
the sending, by the first network device, a time provision request to a second network device based on the clock status message comprises:
sending, by the first network device, the time provision request to the second network device if the first network device determines, based on the recovered clock information and clock information for currently providing a time provision service for the first network device and/or the target terminal, that the source device that sends the clock status message is to provide a time provision service for the target terminal and/or the first network device.

10. The method according to claim 7 or 9, wherein the method further comprises:
receiving, by the first network device, time provision reference information sent by the source device that sends the clock status message, wherein the time provision reference information is used to provide a time provision service for the first network device.

11. The method according to any one of claims 6 to 10, wherein the time provision request comprises a time provision accuracy requirement and/or a time provision clock source requirement.

12. A clock status synchronization method, wherein the method comprises:
receiving, by a terminal, a clock status message, wherein the clock status message indicates a current clock status of a first access network device; and
sending, by the terminal, a time provision request to a second network device based on the clock status message, wherein the time provision request is used to request to provide a time provision service for the terminal and/or a first network device.

13. The method according to claim 12, wherein the clock status message comprises a first clock failure message, indicating that the first access network device encounters a clock failure currently; and the time provision request is specifically used to request to provide a time provision service for the terminal and/or the first network device; or
the clock status message comprises a second clock failure message, indicating that the first access network device encounters a clock failure currently but is capable of continuing to provide a time provision service within a provided start/stop time; and the time provision request is specifically used to request to determine, within the provided start/stop time, another device for providing a time provision service for the terminal and/or the first network device; or
the clock status message comprises a failure recovery message, indicating that a clock of the first access network device has been recovered to normal; and the time provision request is specifically used to request the first access network device to provide a time provision service for the terminal and/or the first network device.

14. The method according to claim 13, wherein when the clock status message comprises the first clock failure message or the second clock failure message, the method further comprises:
receiving, by the first network device, time provision reference information sent by a second access network device, wherein the time provision reference information is used to provide a time provision service for the terminal.

15. The method according to claim 13, wherein the failure recovery message comprises clock information obtained after the failure recovery; and
the sending, by the terminal, a time provision request to a second network device based on the clock status message comprises:
determining, by the terminal based on the recovered clock information and clock information for currently providing a time provision service for the terminal, that the first access network device is to provide a time provision service for the terminal, and sending the time provision request to the second network device.

16. The method according to claim 13 or 15, wherein the method further comprises:
receiving, by the terminal, time provision reference information sent by the first access network device, wherein the time provision reference information is used to provide a time provision service for the terminal.

17. The method according to any one of claims 12 to 16, wherein the time provision request comprises a time provision accuracy requirement and/or a time provision clock source requirement.

18. A clock status synchronization method, wherein the method comprises:
receiving, by a second network device, a time provision request, wherein the time provision request is used to request to provide a time provision service for a first network device and/or a target terminal;
determining, by the second network device, a device for providing a time provision service for the first network device and/or the target terminal; and
modifying, by the second network device, time provision configuration context information of the first network device and/or the target terminal, wherein the time provision configuration context information comprises information about the device for providing a time provision service for the first network device and/or the target terminal.

19. The method according to claim 18, wherein the method further comprises:
sending, by the second network device, time provision indication information to the determined device, wherein the time provision indication information indicates the determined device to provide a time provision service for the first network device and/or the target terminal.

20. The method according to claim 19, wherein the time provision request comprises a time provision accuracy requirement and/or a time provision clock source requirement; and
the second network device determines, based on the time provision accuracy requirement and/or the time provision clock source requirement, the device for providing a time provision service for the first network device and/or the target terminal.

21. The method according to any one of claims 18 to 20, wherein the time provision request comprises a provided start/stop time, and the provided start/stop time indicates to determine, within the provided start/stop time, that another device is the device for providing a time provision service for the first network device and/or the target terminal.

22. The method according to any one of claims 18 to 21, wherein before the determining, by the second network device, a device for providing a time provision service for the first network device and/or the target terminal, the method further comprises:
receiving, by the second network device, a clock status message, wherein the clock status message indicates a current clock status of a source device that sends the clock status message; and
the determining, by the second network device, a device for providing a time provision service for the first network device and/or the target terminal comprises:
determining, by the second network device based on the current clock status of the source device that sends the clock status message, the device for providing a time provision service for the first network device and/or the target terminal.

23. The method according to claim 22, wherein the clock status message comprises information about a time provision object, and the time provision object comprises a network device and/or a terminal, so that when the first access network device encounters a clock failure, the second network device determines, for the time provision object, another device for providing a time provision service, or when a clock failure of the first access network device is recovered, the second network device determines whether the first access network device is to provide an authorization service for the authorization object; or
the method further comprises:
determining, by the second network device, a time provision object based on an identifier of the source device that sends the clock status message; and
determining, by the second network device for the time provision object, a device for providing a time provision service.

24. The method according to any one of claims 18 to 23, wherein the method further comprises:
sending, by the second network device, a time provision notification to a third network device if the second network device does not find a device that is capable of meeting a time provision service requirement of the first network device and/or the target terminal; and
receiving, by the second network device, a time provision notification response sent by the third network device, wherein
the time provision notification response indicates to abandon a clock synchronization requirement for the first network device and/or the target terminal; or
if the time provision notification response comprises information about another device that is for providing a time provision service and that is determined for the first network device and/or the target terminal, the second network device modifies the time provision configuration context information of the first network device and/or the target terminal based on the information about the another device; or
the time provision notification response comprises an updated time provision accuracy requirement and/or time provision clock source requirement of the first network device and/or the target terminal, and the authorization notification response indicates the second network device to determine, for the first network device and/or the target terminal based on the updated time provision accuracy requirement and/or time provision clock source requirement, another device for providing a time provision service.

25. The method according to claim 24, wherein the time provision notification comprises information about one or more candidate access network devices; and/or
the time provision notification comprises one or any combination of the following information: an identifier of the target terminal, an identifier of the first network device, and an identifier of a device-side time sensitive network protocol translation function interface.

26. The method according to any one of claims 18 to 25, wherein the method further comprises:
receiving, by the second network device, a time provision request sent by the third network device, wherein the time provision request comprises information about a time provision object and one or any combination of the following time provision requirement information: a time provision accuracy requirement, a time provision clock source requirement, and coverage area information, the time provision object comprises a network device and/or a terminal, and the time provision request is used to request to select a device that meets the time provision requirement to provide a time provision service for the time provision object; and
selecting, by the second network device for the time provision object based on the time provision request sent by the third network device, a device for providing a time provision service.

27. A clock status synchronization method, wherein the method comprises:
receiving, by a third network device, a time provision notification from a second network device, wherein the time provision notification indicates that the second network device does not determine, for a first network device and/or a target terminal, a device for providing a time provision service; or indicates clock status information of a device that is for providing a time provision service and that is currently determined for a first network device and/or a target terminal; and
sending, by the third network device, a time provision notification response to the second network device, wherein the time provision notification response indicates to abandon a clock synchronization requirement for the first network device and/or the target terminal; or the time provision notification response comprises information about an access network device that is for providing a time provision service and that is determined for the first network device and/or the target terminal; or the time provision notification response comprises updated time provision requirement information of the first network device and/or the target terminal, the time provision requirement information comprises a time provision accuracy requirement and/or a time provision clock source requirement, and the authorization notification response indicates the second network device to determine, for the first network device and/or the target terminal based on the updated time provision requirement information, another device for providing a time provision service.

28. The method according to claim 27, wherein the method further comprises:
sending, by the third network device, a time provision request to the second network device, wherein the time provision request comprises information about a time provision object, and the time provision request further comprises one or any combination of the following time provision requirement information: a time provision accuracy requirement, a time provision clock source requirement, and coverage area information, wherein
the time provision request is used to request to select a device that meets the time provision requirement information to provide a time provision service for the time provision object.

29. A communication apparatus, wherein the communication apparatus comprises a processor, and a memory and a communication interface that are separately coupled to the processor; the communication interface is configured to communicate with another device; and the processor is configured to run instructions or a program in the memory, to perform the method according to any one of claims 1 to 28 by using the communication interface.

30. A computer-readable storage medium, wherein the computer-readable storage medium stores instructions, and when the instructions are run on a computer, the computer is enabled to perform the method according to any one of claims 1 to 28.
